# FASCICULE DE BREVET EUROPEEN

(11) **EP 2 914 464 B1**
(45) Date de publication et mention de la délivrance du brevet: **27.01.2021**
(21) Numéro de dépôt: 13795828.6
(22) Date de dépôt: 28.10.2013
(51) Int. Cl.: B60S 1/38, B60S 1/52

(54) **BALAI D'ESSUIE-GLACE INTEGRANT UN GICLEUR**
WISCHERBLATT MIT EINER DÜSE
WIPER BLADE INCORPORATING A NOZZLE

(30) Priorité: 30.10.2012 FR 1260336
(43) Date de publication de la demande: 09.09.2015
(73) Titulaire: PSA Automobiles SA, 78300 Poissy (FR)
(72) Inventeur: JEUFFE, Gerard, F-78580 Bazemont (FR)
(74) Mandataire: Jeannin, Laurent Jean-Pierre
(86) Numéro de dépôt international: PCT/FR2013/052566
(87) Numéro de publication internationale: WO 2014/068228

(56) Documents cités:
- WO-A1-2012/080676
- WO-A1-2012/136551
- WO-A2-2011/061461
- FR-A1- 2 933 933
- FR-A1- 2 952 883

## Description

La présente invention concerne le système de nettoyage du pare-brise ou de la lunette arrière d'un véhicule, notamment automobile.

De façon classique, le nettoyage du pare-brise ou de la lunette arrière d'un véhicule est assuré par un gicleur situé généralement, pour le nettoyage du pare-brise, sur le capot du véhicule, ou pour le nettoyage de la lunette arrière, en périphérie de cette lunette. Ce gicleur projette sur la vitre à nettoyer un produit de lavage qui est ensuite raclé par les essuie-glaces du véhicule.

Ces gicleurs projettent généralement le liquide de nettoyage suivant une répartition inégale sur la totalité de la surface de la vitre à nettoyer, et sur la carrosserie entourant cette vitre. Les balais d'essuie-glace ne raclant qu'une partie de la vitre, les zones non raclées de la vitre et la carrosserie sont salies par le liquide de nettoyage qui forme des taches blanches après évaporation

Le document EP2504206 A2 décrit un balai d'essuie-glace avec un capuchon qui supporte un anneau élastique sur lequel est monté un gicleur.

Pour remédier notamment à l'inconvénient précité, il a été proposé dans la demande de brevet FR 2 952 883 un balai d'essuie-glace de véhicule automobile comportant une lame souple allongée, dans lequel une extrémité de la lame est recouverte par un capuchon qui intègre un conduit équipé d'un gicleur décalé sur le côté de la lame souple par rapport au plan médian longitudinal de la lame souple.

Un des inconvénients de cette solution est que la réalisation du capuchon, en particulier par moulage, est relativement complexe notamment à cause de sa forme. En outre, le capuchon doit être adapté pour chaque modèle d'essuie-glace et chaque type de véhicule. Un moule différent doit être utilisé pour réaliser chacun des capuchons résultants de ces adaptations.

L'invention vise d'une part à faciliter la fabrication, en particulier par moulage, du capuchon recouvrant l'extrémité de la lame et, d'autre part, de permettre différentes adaptations du capuchon pour s'adapter à différents types de véhicule tout en utilisant le même moule pour fabriquer les capuchons.

Selon l'invention, il est prévu un balai d'essuie-glace de véhicule, comportant une lame de forme allongée, un capuchon recouvrant une extrémité de la lame, la lame comportant une lèvre d'essuyage, comprenant en outre:
- un tube gicleur rectiligne, orienté de manière à projeter, au niveau d'un point d'impact de la lame, un jet de liquide qui s'écoule ensuite le long de la lèvre de la lame,
- une portion de canalisation distincte dudit capuchon et solidarisée avec ledit capuchon, dont une extrémité est raccordée au tube gicleur et dont une autre extrémité est destinée à être raccordée à un tuyau d'alimentation en liquide, le capuchon comportant une zone de support du tube gicleur, caractérisé en ce que la zone de support comporte un trou débouchant permettant le passage du tube gicleur, et en ce que le diamètre du trou débouchant est tel que le tube gicleur est emmanché en force dans le trou débouchant de la zone de support.

L'utilisation de trois pièces distinctes, le capuchon, la portion de canalisation et le tube gicleur permet de faciliter la réalisation du capuchon, les trois pièces étant faciles à réaliser et à assembler.

De plus, l'ensemble formé par le capuchon et la portion de canalisation est facilement adaptable à différents types de véhicule, non pas en pas modifiant ces pièces comme dans l'art antérieur, mais en modifiant la façon dont elles sont solidarisées.

Selon un mode de réalisation de l'invention, la solidarisation de la portion de canalisation au capuchon est réalisée par soudure, collage ou clippage.

Selon une caractéristique de l'invention, l'axe longitudinal de la portion de canalisation et l'axe longitudinal du balai d'essuie-glace sont deux axes distincts.

De façon préférentielle, le tube gicleur présente un diamètre intérieur constant.

De façon préférentielle, la longueur du tube gicleur vaut au moins six fois son diamètre intérieur.

Avantageusement, le diamètre intérieur du tube gicleur est compris entre 0.3mm et 3mm.

Avantageusement, le capuchon et la portion de canalisation sont en plastique et en ce que le gicleur est en métal.

Avantageusement, le tube gicleur comprend un revêtement évitant qu'une goutte de liquide s'accroche à son embouchure.

L'invention concerne aussi un véhicule comportant un balai d'essuie-glace selon l'invention.

D'autres caractéristiques et avantages de l'invention apparaîtront à l'examen de la description détaillée ci-après, et des dessins annexés, sur lesquels:
- la figure 1 représente une vue éclatée, en perspective, de l'extrémité de la lame souple, du capuchon et du gicleur, d'un balai d'essuie-glace selon l'invention ;
- la figure 2 représente une vue en perspective d'une extrémité d'un balai d'essuie-glace selon l'invention ;
- la figure 3 représente une vue, selon la coupe AA de la figure 2, d'une extrémité d'un balai d'essuie-glace selon l'invention ;
- la figure 4 représente schématiquement les différentes aires nettoyées sur la surface vitrée.

Les dessins annexés pourront non seulement servir à compléter l'invention, mais aussi contribuer à sa définition, le cas échéant.

L'invention permet de faciliter la fabrication par moulage d'un capuchon recouvrant l'extrémité de la lame d'un essuie-glace. L'invention permet aussi différentes adaptations du capuchon pour s'adapter à différents types de véhicule tout en utilisant le même moule pour fabriquer les capuchons.

L'invention s'attache également à respecter des caractéristiques de forme et d'orientation de jet de liquide bien adaptées pour un écoulement, essentiellement laminaire, peu ou pas perturbé, de ce jet de liquide le long de la lèvre de la lame, et d'obtenir pour cela des tolérances de dimensionnement faibles pour la canalisation du dispositif de projection de liquide.

Pour réaliser un bon compromis entre toutes ces exigences, l'invention propose, d'une part, de solidariser, par exemple par soudage, une première pièce rapportée faisant office de portion de la canalisation, à la structure du capuchon, et d'autre part, d'utiliser pour le gicleur une deuxième pièce rapportée qui sera donc raccordée à cette portion de canalisation, mais non pas intégrée à cette portion de canalisation. Lors du raccordement, la pièce rapportée que constitue le gicleur pourra bien sûr être fixé à la portion de canalisation laquelle est déjà solidarisée avec le capuchon.

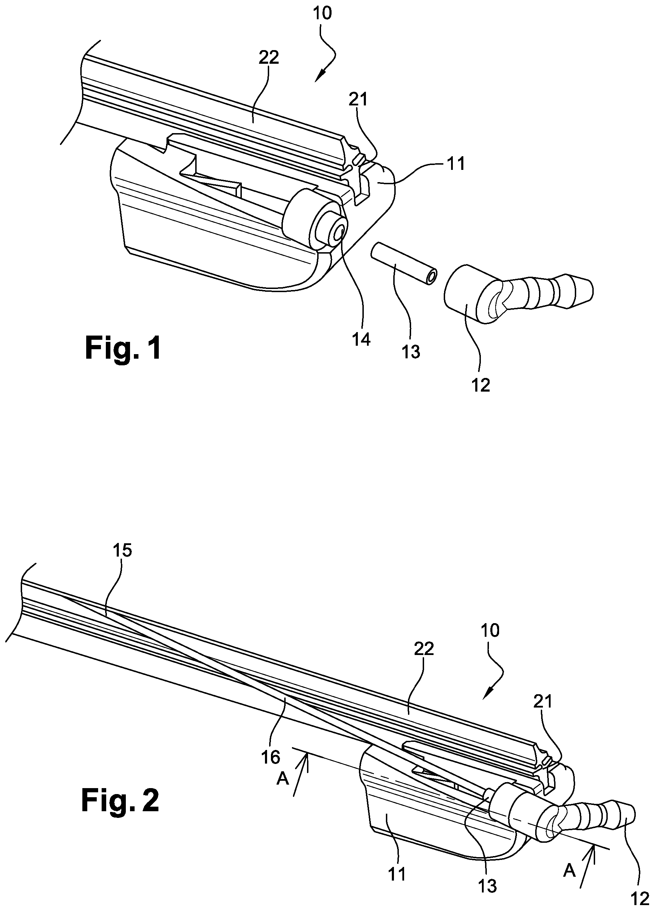

La figure 1 représente une vue éclatée, en perspective, de l'extrémité de la lame, du capuchon et du gicleur, d'un balai d'essuie-glace selon l'invention. La figure 2 représente une vue en perspective d'une extrémité d'un balai d'essuie-glace selon l'invention.

Le balai d'essuie-glace 10 comprend une lame 21 intégrant une lèvre d'essuyage 22 destinée à essuyer l'eau sur la surface vitrée du véhicule. La lame 21 et sa lèvre d'essuyage 22 sont en caoutchouc ou toute autre matière souple adaptée à l'essuyage. De façon alternative, la lèvre 22 est par exemple dans un matériau souple de type caoutchouc et le reste de la lame 21 dans un matériau différent par exemple un plastique plus rigide.

Le balai d'essuie-glace 10 selon l'invention comporte un capuchon 11 (ou end-clip selon l'expression anglo-saxonne), une portion de canalisation 12, et un tube gicleur 13. Le capuchon 11 est destiné à recouvrir une partie d'une extrémité d'un balai d'essuie-glace. Le capuchon 11 vient se fixer à l'extrémité de la lame 21 en se clippant.

Le capuchon 11 comporte une zone de support 14 du tube gicleur 13. La zone de support 14 comporte un trou débouchant 14 permettant le passage du tube gicleur 13.

Le trou 14 est réalisé de sorte le tube gicleur 13 est orienté de manière à projeter un jet de liquide 16 vers un point d'impact donné 15 sur la lèvre 22 de la lame 21.

Le diamètre du trou débouchant 14 est tel que le tube gicleur 13 est emmanché en force dans le trou débouchant 14 de la zone de support.

Une extrémité de la portion de canalisation 12 est solidarisée au capuchon 11 au niveau du trou débouchant 14. L'autre extrémité est destinée à être raccordée à un tuyau d'alimentation en liquide. Le tuyau souple d'alimentation en liquide de lavage, non représenté, est relié au bocal de liquide lave-glace généralement situé sous le capot moteur du véhicule. La portion de canalisation 12 solidarisée au capuchon 11 agit comme une butée lorsque le tube gicleur 13 est inséré dans le trou 14.

La solidarisation de la portion de canalisation 12 au capuchon 11 est réalisée par exemple par soudure laser ou ultrason, collage ou clippage ou tout autre moyen équivalent permettant de solidariser la portion de canalisation 12 au capuchon 11.

Le capuchon 11 et la portion de canalisation 12 sont deux pièces moulées séparément. On comprend donc que le raccord 12, avant d'être solidarisé au capuchon 11, est libre en rotation autour de l'axe longitudinal du trou 14 et du tube gicleur 13. Le raccord 12 peut donc être solidarisé au capuchon 11 selon différente position (obtenue par rotation autour de l'axe longitudinal du tube gicleur 13). Ceci permet d'utiliser ces pièces pour différents véhicules, ce qui permet de minimiser le nombre de moules utilisés pour le moulage des pièces.

Le tube gicleur 13 projette le liquide de lavage, par exemple à base d'eau et de détergent, directement sur la lèvre de la lame 21 au niveau d'un point d'impact 15. Le jet de liquide 16 de lavage sort par l'orifice du tube gicleur 13 avant d'être projeté sur la lèvre 22 de la lame 21 et avant de s'écouler ensuite de manière laminaire le long de la lèvre, au moins sur la majeure partie de la longueur de la lèvre 22, éventuellement aidé par la force centrifuge pour aller jusqu'au bout de la lèvre 22.

Le jet de liquide est projeté 16 et s'écoule ensuite le long de la majeure partie de la lèvre 22 de la lame 21, avantageusement pendant une période de repos, lorsque le balai 10 d'essuie-glace est à l'arrêt avant de se retourner et de se déplacer à nouveau sur son aire d'essuyage pour essuyer la surface vitrée. Le retournement de la lèvre 22 de la lame 21, avant sa remontée sur la surface vitrée, permet de plaquer le liquide de lavage qui s'est écoulé le long de la majeure partie de la lèvre 22, entre la lèvre 22 et la surface vitrée. Si le liquide de lavage ne s'est pas écoulé sur toute la longueur de la lèvre 22 de la lame 21, lors de la remontée de la lame, la force centrifuge assurera la répartition du liquide jusqu'à l'extrémité de la lame 21 opposée à celle qui porte le tube gicleur 13.

Dans cette position de repos, la lèvre 22 souple de la lame 21 étant en appui sur la surface vitrée, cette lèvre 22 forme une concavité sur toute sa longueur, concavité dans laquelle le jet de liquide 16 projeté peut ensuite s'écouler plus facilement et plus loin tout en conservant un écoulement essentiellement laminaire.

Le tube gicleur 13 est rectiligne (autrement dit, il comporte une unique section rectiligne). Selon une caractéristique de l'invention, le tube gicleur 13 présente un diamètre intérieur constant.

Préférentiellement, la longueur du tube gicleur 13 vaut au moins six fois son diamètre intérieur. Ceci permet d'obtenir un jet 16 de liquide laminaire, autrement dit un jet dont la section est sensiblement constante, depuis la sortie du tube gicleur 13.

Préférentiellement, le diamètre intérieur du tube est compris entre 0.3mm et 3mm.

De façon préférentielle, le capuchon 11 et la portion de canalisation 12 sont en plastique et le gicleur 14 est en métal par exemple de l'inox. L'utilisation d'un tube gicleur en métal améliore la précision du dimensionnement du tube lors de sa fabrication. Ceci permet de régler très précisément le point d'impact 15 du jet de liquide 16 sur la lèvre 22 de la lame 21, ce qui contribue à améliorer la répartition du liquide, lors de son écoulement, sur la lame 21.

Le liquide de lavage passe donc successivement par le tuyau d'alimentation, la portion de canalisation 12, le tube gicleur 13, avant d'être projeté sur la lèvre 22 de la lame 21.

L'utilisation du tube gicleur 13 rectiligne raccordé directement au canal du raccord 12 permet de n'avoir qu'un seul un coude dans le circuit de liquide. Ceci permet d'avoir une pompe, pour le liquide de lavage, de puissance plus faible et moins de perte de charge que si le circuit comportait plus de coudes.

Préférentiellement, le tube gicleur 13 comprend un revêtement évitant qu'une goutte de liquide s'accroche à son embouchure. Ce revêtement est par exemple du téflon. Ce revêtement permet notamment d'éviter qu'une goutte de liquide de lavage ne gèle à l'embouchure du tube gicleur 13, par exemple l'hiver, ce qui empêcherait son fonctionnement.

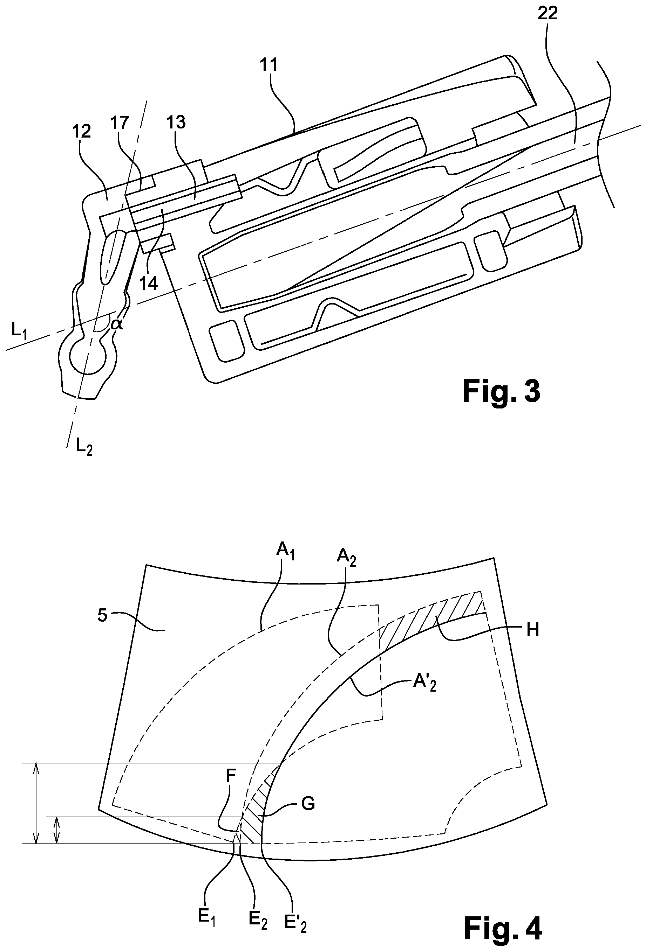

La figure 3 représente une vue, selon la coupe AA de la figure 3, d'une extrémité d'un balai d'essuie-glace 10 selon l'invention. La figure illustre l'axe longitudinal L2 de la portion de canalisation 12 et l'axe longitudinal L1 du balai d'essuie-glace 10. Selon une caractéristique de l'invention, l'axe longitudinal L2 de la portion de canalisation 12 et l'axe longitudinal L1 du balai d'essuie-glace 10 sont deux axes distincts, l'axe longitudinal L2 de la portion de canalisation 12 étant incliné par rapport à l'axe longitudinal L1 du balai d'essuie-glace 10. Dans l'exemple, de réalisation, les deux axes forment un angle α de l'ordre de 135°. Il s'agit d'un exemple donné àtitre indicatif et non limitatif, l'angle pouvant varier en fonction du véhicule, des balais d'essuie-glace utilisés et du parebrise.

Le capuchon 11 comporte un épaulement 17 au niveau du trou débouchant 14. L'épaulement 17 est destiné à coopérer avec un évidement de forme complémentaire pratiquée à l'extrémité de la portion de canalisation 12 destinée à être solidarisée au capuchon 11.

L'extrémité du tube gicleur 13 en contact avec la portion de canalisation 12 affleure avec le capuchon 11.

Selon une caractéristique le capuchon 11 est conformé de sorte que le jet 16 de liquide est toujours à une distance minimale des parois du capuchon 11 de façon à éviter un phénomène d'aspiration (connu sous le nom d'effet venturi) se produisant lorsque le jet 16 est trop proche d'une paroi, cette aspiration ayant pour effet de dévier le jet 16.

La figure 4 représente schématiquement les différentes aires nettoyées sur la surface vitrée, pour deux positions relatives, distinctes entre elles, des extrémités de lames des deux balais d'essuie-glace situés sur un pare-brise de véhicule. On note 5 la surface du pare-brise et E1 et E2 les positions au repos des extrémités contiguës des deux lames des deux balais d'essuie-glace, respectivement de la première lame du premier balai et de la deuxième lame du deuxième balai. Les contours A1 et A2 entourent les aires de nettoyage respectives des deux lames.

Les positions E1 et E2, correspondant à une utilisation de balais selon l'invention, sont assez proches l'une de l'autre lorsque l'axe longitudinal L2 de la portion de canalisation 12 du premier balai est bien inclinée par rapport à l'axe longitudinal L1 du balai d'essuie-glace 10 du premier balai. La zone F située entre les deux aires de nettoyage n'est pas nettoyée ; elle est toutefois de taille très réduite.

En effet, avec le capuchon décrit dans FR 2 952 883, la direction moyenne de la portion de canalisation est dans le prolongement de la direction moyenne de la première lame du premier balai, l'extrémité de la deuxième lame du deuxième balai se décale de la position E2 à la position E'2, et son aire de nettoyage est entourée par le contour A'2 qui est plus restreint que le contour A2. Il en résulte une zone supplémentaire G, située en bas de pare-brise, non nettoyée de taille bien plus importante que la zone F. De plus, une zone H, située en haut de pare-brise, n'est plus nettoyée non plus. Les zones F, G et H sont hachurées pour être rendues plus visibles.

Avec le capuchon de FR 2 952 883, le tuyau d'alimentation en liquide de lavage le tuyau est raccordé à la portion de canalisation dans le prolongement de la lame. Le tuyau de lavage occupe un espace qui contraint à éloigner les deux lames l'une de l'autre. Ceci augmente les zones non nettoyées.

Au contraire avec le capuchon selon l'invention, le tuyau est raccordé à la portion de canalisation qui forme un angle avec la direction moyenne de la lame. Le tuyau n'occupe donc pas l'espace à l'extrémité de la lame. Les deux lames peuvent être disposées plus proche qu'avec le capuchon de l'art antérieur. Ceci permet donc d'augmenter la surface de nettoyage sur le parebrise par rapport au capuchon selon l'art connu, en particulier en partie haute du parebrise (la zone H).

On rappelle qu'un essuie-glace comporte essentiellement un entraineur destiné à être relié à un moteur pour assurer un mouvement de rotation du balai, un carter relié à l'entraineur par une articulation. Le carter est relié à une tige, elle-même relié à un balai d'essuie-glace. Lorsque le tube gicleur est installé à l'extrémité du balai, le tuyau d'alimentation en liquide de lavage est alors dissimulé le long de la tige de l'essuie-glace. Le fait que l'axe longitudinal L2 de la portion de canalisation 12 est incliné par rapport à l'axe longitudinal L1 du balai d'essuie-glace 10 permet de limiter la courbure su tuyau d'alimentation et donc de cacher une plus grande portion de tuyau derrière la tige du balai d'essuie-glace par rapport au capuchon de FR 2 952 883. Le fait de cacher une plus grande portion de le tuyau derrière la tige permet, d'une part, d'améliorer l'aspect esthétique du balai d'essuie-glace, d'autre part, de protéger le tuyau contre des agressions extérieures (par exemple un grattoir).

De façon avantageuse, le tuyau d'alimentation en liquide est formé dans un matériau semi-rigide. Le tuyau contribue alors à éviter le broutement du balai sur son rayon intérieur (autrement dit le rayon décrit par l'extrémité E1 du balai depuis sa position de repos jusqu'à sa position extrême de balayage). En effet, le rayon intérieur étant très inférieur au rayon extérieur, la vitesse de déplacement de l'extrémité du balai se déplaçant sur le rayon intérieur est inférieure à celle de l'extrémité se déplaçant le long du rayon extérieur. Lorsque cette vitesse déplacement est trop faible le balai d'essuie-glace broute, autrement dit se déplace par à-coups.

## Revendications

1. Balai d'essuie-glace (10) de véhicule, comportant une lame (21) de forme allongée, un capuchon (11) recouvrant une extrémité de la lame (21), la lame comportant une lèvre d'essuyage (22), comprenant en outre:
- un tube gicleur (13) rectiligne, orienté de manière à projeter, au niveau d'un point d'impact (15) de la lame (21), un jet de liquide (16) qui s'écoule ensuite le long de la lèvre (22) de la lame (21),
- une portion de canalisation (12) distincte dudit capuchon (11) et solidarisée avec ledit capuchon (11), dont une extrémité est raccordée au tube gicleur (13) et dont une autre extrémité est destinée à être raccordée à un tuyau d'alimentation en liquide,
capuchon (11) comportant une zone de support du tube gicleur (13), **caractérisé en ce que** la zone de support comporte un trou débouchant (14) permettant le passage du tube gicleur (13), et **en ce que** le diamètre du trou débouchant (14) est tel que le tube gicleur (13) est emmanché en force dans le trou débouchant (14) de la zone de support.

2. Balai d'essuie-glace selon la revendication 1, dans lequel la solidarisation de la portion de canalisation (12) au capuchon (11) est réalisée par soudure, collage ou clippage.

3. Balai d'essuie-glace selon l'une des revendications 1 ou 2, dans lequel l'axe longitudinal (L₂) de la portion de canalisation (11) et l'axe longitudinal (L₁) du balai d'essuie-glace (10) sont deux axes distincts.

4. Balai d'essuie-glace selon l'une des revendications précédentes, dans lequel le tube gicleur (13) présente un diamètre intérieur constant.

5. Balai d'essuie-glace selon l'une des revendications précédentes, dans lequel la longueur du tube gicleur (13) vaut au moins six fois son diamètre intérieur.

6. Balai d'essuie-glace selon l'une des revendications précédentes, **caractérisé en ce que** le diamètre intérieur du tube gicleur (13) est compris entre 0.3mm et 3mm.

7. Balai d'essuie-glace selon l'une des revendications précédentes, dans lequel le capuchon (11) et la portion de canalisation (12) sont en plastique et en ce que le gicleur (13) est en métal.

8. Balai d'essuie-glace selon l'une quelconque des revendications précédentes, dans lequel le tube gicleur (13) comprend un revêtement évitant qu'une goutte de liquide s'accroche à son embouchure.

9. Véhicule comportant un balai d'essuie-glace (10) selon l'une quelconque des revendications précédentes.

## Patentansprüche

1. Scheibenwischerblatt (10) eines Fahrzeugs mit einer länglichen Lamelle (21), einer Kappe (11), die ein Ende der Lamelle (21) bedeckt, wobei die Lamelle eine Wischlippe (22) aufweist, weiter umfassend:
- ein geradliniges Düsenrohr (13), das so ausgerichtet ist, dass es an einem Auftreffpunkt (15) der Lamelle (21) einen Flüssigkeitsstrahl (16) ausstößt, der dann entlang der Lippe (22) der Lamelle (21) strömt,
- einen von der Kappe (11) getrennten und mit der Kappe (11) einstückig ausgebildeten Leitungsabschnitt (12), dessen eines Ende mit dem Düsenrohr (13) verbunden ist und dessen anderes Ende dazu bestimmt ist, mit einer Flüssigkeitszuführleitung verbunden zu werden,
wobei die Kappe (11) einen Haltebereich des Düsenrohrs (13) aufweist, **dadurch gekennzeichnet, dass** der Haltebereich ein Durchgangsloch (14) aufweist, das den Durchgang des Düsenrohrs (13) ermöglicht, und dass der Durchmesser des Durchgangslochs (14) derart ist, dass das Düsenrohr (13) in das Durchgangsloch (14) des Haltebereichs presseingepasst wird.

2. Scheibenwischerblatt nach Anspruch 1, wobei die Verbindung des Leitungsabschnitts (12) mit der Kappe (11) durch Schweißen, Kleben oder Clipsen erfolgt.

3. Scheibenwischerblatt nach einem der Ansprüche 1 oder 2, wobei die Längsachse (L₂) des Leitungsabschnitts (11) und die Längsachse (L₁) des Scheibenwischerblatts (10) zwei getrennte Achsen sind.

4. Scheibenwischerblatt nach einem der vorstehenden Ansprüche, wobei das Düsenrohr (13) einen konstanten Innendurchmesser aufweist.

5. Scheibenwischerblatt nach einem der vorstehenden Ansprüche, wobei die Länge des Düsenrohrs (13) mindestens das Sechsfache seines Innendurchmessers beträgt.

6. Scheibenwischerblatt nach einem der vorstehenden Ansprüche, **dadurch gekennzeichnet, dass** der Innendurchmesser des Düsenrohrs (13) zwischen 0,3 mm und 3 mm liegt.

7. Scheibenwischerblatt nach einem der vorstehenden Ansprüche, wobei die Kappe (11) und der Leitungsabschnitt (12) aus Kunststoff und die Düse (13) aus Metall hergestellt sind.

8. Scheibenwischerblatt nach einem der vorstehenden Ansprüche, wobei das Düsenrohr (13) eine Beschichtung aufweist, die verhindert, dass ein Flüssigkeitstropfen an seiner Einmündung haften bleibt.

9. Fahrzeug, das ein Scheibenwischerblatt (10) nach einem der vorstehenden Ansprüche aufweist.

## Claims

1. Vehicle wiper blade (10), comprising a blade (21) having an elongated shape, a cap (11) covering one end of the blade (21), the blade comprising a wiping lip (22), further comprising:
- a straight nozzle tube (13), oriented so as to spray, at the level of an impact point (15) of the blade (21), a jet of liquid (16) that then flows along the lip (22) of the blade (21),
- a duct portion (12) separate from said cap (11) and rigidly secured to said cap (11), of which one end is connected to the nozzle tube (13), and of which another end is intended to be connected to a liquid supply pipe,
the cap (11) comprising a support zone of the nozzle tube (13), **characterised in that** support zone comprises a through hole (14) allowing the passage of the nozzle tube (13), and **in that** the diameter of the through hole (14) is such that the nozzle tube (13) is inserted by force into the through hole (14) of the support zone.

2. Wiper blade according to claim 1, wherein the securing of the duct portion (12) to the cap (11) is done by welding, gluing or clipping.

3. Wiper blade according to one of claims 1 or 2, wherein the longitudinal axis (L₂) of the duct portion (11) and the longitudinal axis (L₁) of the wiper blade (10) are two separate axes.

4. Wiper blade according to one of the preceding claims, wherein the nozzle tube (13) has a constant inner diameter.

5. Wiper blade according to one of the preceding claims, wherein the length of the wiper blade (13) is at least six times its inner diameter.

6. Wiper blade according to one of the preceding claims, **characterised in that** the inner diameter of the nozzle tube (13) is comprised between 0.3mm and 3mm.

7. Wiper blade according to one of the preceding claims, wherein the cap (11) and the duct portion (12) are made of plastic and in that the nozzle (13) is made of metal.

8. Wiper blade according to any one of the preceding claims, wherein the nozzle tube (13) comprises a coating avoiding a drop of liquid clinging to its mouthpiece.

9. Vehicle comprising a wiper blade (10) according to any one of the preceding claims.
